## Europäisches Patentamt
## European Patent Office
## Office européen des brevets

(19)

(11) Veröffentlichungsnummer: **0 120 188**
**B1**

(12) # EUROPÄISCHE PATENTSCHRIFT

(45) Veröffentlichungstag der Patentschrift:
09.04.86

(51) Int. Cl.⁴: **C 02 F 3/28**

(21) Anmeldenummer: **84100330.4**

(22) Anmeldetag: **13.01.84**

(54) Vorrichtung zum anaeroben Behandeln von Rohschlamm bzw. hochbelastetem Abwasser.

(30) Priorität: 16.03.83 DE 3309300

(43) Veröffentlichungstag der Anmeldung:
03.10.84 Patentblatt 84/40

(45) Bekanntmachung des Hinweises auf die Patenterteilung:
09.04.86 Patentblatt 86/15

(84) Benannte Vertragsstaaten:
**AT BE CH FR LI LU NL**

(56) Entgegenhaltungen:
**EP - A - 0 078 919**
**DE - A - 3 144 487**
**DE - C - 907 280**
**US - A - 3 862 279**

(73) Patentinhaber: **KLÖCKNER-WERKE AKTIENGESELLSCHAFT, Klöcknerstrasse 29, D-4100 Duisburg 1 (DE)**

(72) Erfinder: **Der Erfinder hat auf seine Nennung verzichtet**

(74) Vertreter: **Kiefer, Winfried, Dipl.-Phys., Klöckner-Werke Aktiengesellschaft Patentabteilung Klöcknerstrasse 29, D-4100 Duisburg 1 (DE)**

## Beschreibung

Die Erfindung betrifft eine Vorrichtung zum anaeroben Behandeln von Rohschlamm bzw. hochbelastetem Abwasser, insbesondere aus kommunalen Kläranlagen, wobei die Behandlung in mindestens zwei Reaktionsräumen mit unterschiedlichem biochemischem Milieu erfolgt.

Unter Rohschlamm sind im folgenden kommunale Klärschlämme unter organisch hochbelastete, ausfaulbare Abwässer zu verstehen. In beiden Fällen handelt es sich um wässrige Lösungen von maximal 5% organischen und/oder mineralisch gelösten Feststoffen.

Es ist bekannt (Zeitschrift "Wasser und Boden", 1981, Heft 5, Seite 210 ff, insbesondere Figur 6), das anaerobe Behandeln einstufig in Reaktoren durchzuführen, indem der Rohschlamm (das Abwasser) unten in den Reaktor im unteren Bereich eingeleitet und im oberen Bereich abgezogen wird. Das Abwasser fließt langsam durch den sich im unteren Teil des Reaktors befindlichen Anaerobschlamm. Die Durchmischung des Behälterinhaltes erfolgt einerseits durch das sich bildende Gas, sowie durch am Boden an verschiedenen Stellen angeordnete Düsen zum Zuführen des behandelnden Abwassers. Das behandelte Abwasser und der Schlamm werden im oberen Teil des Reaktors mittels Emscherrinnen getrennt. Prinzipiell ist beim Anaerobverfahren eine gewisse Mindestturbulenz in dem zu reinigenden Abwasser für den Substrat- und Sauerstoffwechselprodukten-Transport erforderlich. Neuere Untersuchungen führten zu dem Ergebnis, daß die Acetat- und Methanbakterien in einer räumlich engen Symbiose die besten Abbauergebnisse erzielen. Eine Störung dieser Symbiose erfolgt dann, wenn die durch die Strömung ausgeübten Scherkräfte zu groß werden. Es ergeben sich somit die gegensätzlichen Forderungen, einerseits den Behälterinhalt gut zu durchmischen und andererseits die Scherkräfte möglichst gering zu halten. Die Frage der optimalen Durchmischung bei gleichzeitig minimalen Scherkräften, wirtschaftlichem Energieeinsatz und weiterhin einfacher reparaturfreundlicher Installation sind bisher offengeblieben. Diese einstufigen Verfahren haben im wesentlichen den Nachteil, daß Verweilzeiten für den zu behandelnden Rohschlamm von 24-30 Tagen im Reaktor erforderlich sind und die demgemäß erforderlichen Reaktoren beachtliche Abmessungen aufweisen müssen. Große Mengen von anfallendem Rohschlamm können nicht wirtschaftlich behandelt werden.

Es sind weiterhin zweistufige Verfahren zum Behandeln von Abwässern bekannt, die den Einsatz von mindestens zwei Behältern erfordern. Diesem zweistufigen Verfahren liegt die Vorstellung zugrunde, daß der anaerobe Abbau sich in zwei Stufen vollzieht, wobei die erste Stufe mesophil und die zweite Stufe thermophil abläuft. Nach neueren Erkenntnissen verläuft der anaerobe Prozeß erheblich komplizierter, so daß von da aus die vorausgesagten Ergebnisse des Zwei-Stufen-Modells nicht eintreten können und voraussichtlich eine Optimierung mit mehr als zwei Stufen zu erwarten ist. Bei diesen bekannten zweistufigen Verfahren bestehen ebenfalls die obengenannten gegensätzlichen Forderungen.

Der Erfindung liegt die Aufgabe zugrunde, eine Vorrichtung der eingangs erwähnten Art zu schaffen, die eine ausreichende Umwälzung für einen optimalen Substrat- und Stoffwechselprodukt-Transport gewährleistet und das zu hohe, die Symbiose beeinträchtigende Scherkräfte vermeidet.

Es ergeben sich hierdurch überraschend gute Durchmischungen in den Reaktionsräumen, ohne daß die Symbiose der Bakterien durch zu hohe Scherkräfte beeinträchtigt wird.

Diese Aufgabe wird erfindungsgemäß dadurch gelöst, daß in den Reaktionsräumen zur Erzeugung einer Umlaufströmung jeweils mindestens eine Umlaufstromführung und ein Stromteiler koaxial zueinander angeordnet sind, in dem Stromteiler ein Axialstromrad koaxial angeordnet ist und daß die Umlaufführung aus einem flexiblen Material besteht. Durch diese Maßnahmen wird erreicht, daß in dem Reaktionsraum eine koaxiale Umlaufströmung und im Kern der koaxialen Umlaufströmung durch Stromteilung und Energiezufuhr ein beschleunigter Teilstrom zum Aufrechterhalten der koaxialen Umlaufströmung erzeugt wird. Im Prinzip genügt es in einem Reaktionsraum eine Umlaufstromführung, einen Stromteiler und ein Stromrad axialer Bauart anzuordnen, die dann zum Beispiel in einem Reaktionsraum mit Zylindersymmetrie und lotrechter Achse eine koaxiale in sich geschlossene Umlaufströmung erzeugen. Bei Behältern von großem Durchmesser ist es jedoch vorteilhaft, diese Anordnung von Umlaufführung, Stromteiler und Stromrad axialer Bauart mehrfach vorzusehen, so daß integral gesehen eine symmetrische Umlaufströmung erzeugt wird. Eine derartige Anordnung hat vor allem den Vorteil, daß im unmittelbaren Bereich der Stromräder axialer Bauart die Strömungsgeschwindigkeit sehr niedrig vorgegeben werden kann. Prinzipiell könnte die Umlaufführung ein Metallrohr sein. Bei den im Hinblick auf das Volumen des Reaktionsraumes erforderlichen Bemessungen der Umlaufführung ergeben sich jedoch konstruktive und fertigungstechnische Probleme. Insbesondere muß dann dem hohen Gewicht der Umlaufstromführung Rechnung getragen werden. Ein Nachteil ergibt sich auch dann, wenn Vorrichtungen zum anaeroben Behandeln von Abwasser, die in konventioneller Weise betrieben werden, nachträglich auf einen Betrieb mit einer Umlaufführung umgerüstet werden sollen, da die Umlaufstromführungen im allgemeinen einen viel größeren Durchmesser aufweisen, als die Mannlöcher und dgl. der umzurüstenden Vorrichtungen aufweisen. Aus diesen Gründen besteht die Umlaufstromführung erfindungsgemäß aus einem flexiblen Material, das gegen den zu behandelnden Rohschlamm bzw. das zu behandelnde Abwasser resistent ist, ein geringes Gewicht aufweist und dadurch, daß sie flexibel ist, zum Umrüsten von bisher konventionell betriebenen Vorrichtungen im zusammengefalteten bzw. zusammengelegten Zustand in den Reaktionsraum gebracht werden kann. Aufgrund des im allgemeinen geringen Gewichtes erfordert das nachträgliche Umrüsten keine zusätzlichen Verstärkungen der Behälter durch Knotenbleche und dergleichen.

Erfindungsgemäß kann die Umlaufstromführung ein Gewebeschlauch mit einer Beschichtung sein, sie kann auch ein Folienschlauch mit einer Verstärkungseinlage bzw. einer Verstärkungsauflage sein. Ein auf entsprechende Länge zurechtgeschnittener Schlauchabschnitt wird in Längsrichtung gefaltet in den Reaktionsraum gebracht und auf eine rohrförmige Form gebracht.

In einer weiteren Ausgestaltung der Erfindung weist die Umlaufführung an ihrem oberen und unteren Ende jeweils einen Hohlkörper auf. Diese Hohlkörper können aus dem gleichen Material hergestellten und miteinander vernähten, verschweißten Zuschnitten bestehen, die unter Spannung eine ringförmige Gestalt einnehmen und zwischen denen nach Art eines Rohres die Umlaufstromführung angeordnet ist. In einer noch weiteren Ausgestaltung der Erfindung ist der untere Hohlkörper durch Ausgießen z.B. mit Beton oder durch Ausschäumen mit einem Kunststoffmaterial beschwert. Zusätzlich kann erfindungsgemäß der obere Hohlkörper als Auftriebskörper ausgebildet sein, wobei der Auftrieb des oberen Hohlkörpers das Gewicht der Umlaufstromführung und das Gewicht des beschwerten Hohlkörpers im wesentlichen kompensiert.

In einer weiteren Ausgestaltung der Erfindung sind die Hohlkörper als Stromumkehr-Leitkörper ausgebildet. Es zeigte sich nämlich, daß aus energetischen Gründen die Strömung im oberen und unteren Umkehrbereich so geführt werden soll, daß Turbulenzen vermieden werden.

Die Erfindung ist in der Zeichnung anhand eines im Längsschnitt dargestellten Ausführungsbeispiels erläutert.

Mit 1 ist der den Reaktionsraum 2 umschließende Behälter bezeichnet, der einen in etwa ellipsoidförmigen Querschnitt hat und mit seiner großen Achse $\bar{A}\bar{A}$ lotrecht angeordnet ist.

Koaxial zu dieser Achse sind der Stromteiler 3 und die Umlaufstromführung 4 angeordnet. Der Stromteiler ist an mit der Behälterinnenwandung verbundenen Profilen 5 und die Umlaufstromführung mit ebenfalls an der Behälterinnenwand befestigten Profilen 6 angeordnet. In dem Stromteiler ist das Axialstromrad 7 zentriert angeordnet und ist mit der von dem Behälter getragenen Aufhängung 8 verbunden. Der Behälter hat eine Zuflußleitung 9 und eine Abflußleitung 10, die in Füllhöhe des Reaktionsraumes verläuft.

Der Stromteiler und die Umlaufstromführung begrenzen einen umlaufenden Spalt. Im stationären Betrieb existiert eine koaxiale Umlaufströmung in Richtung der Pfeile.

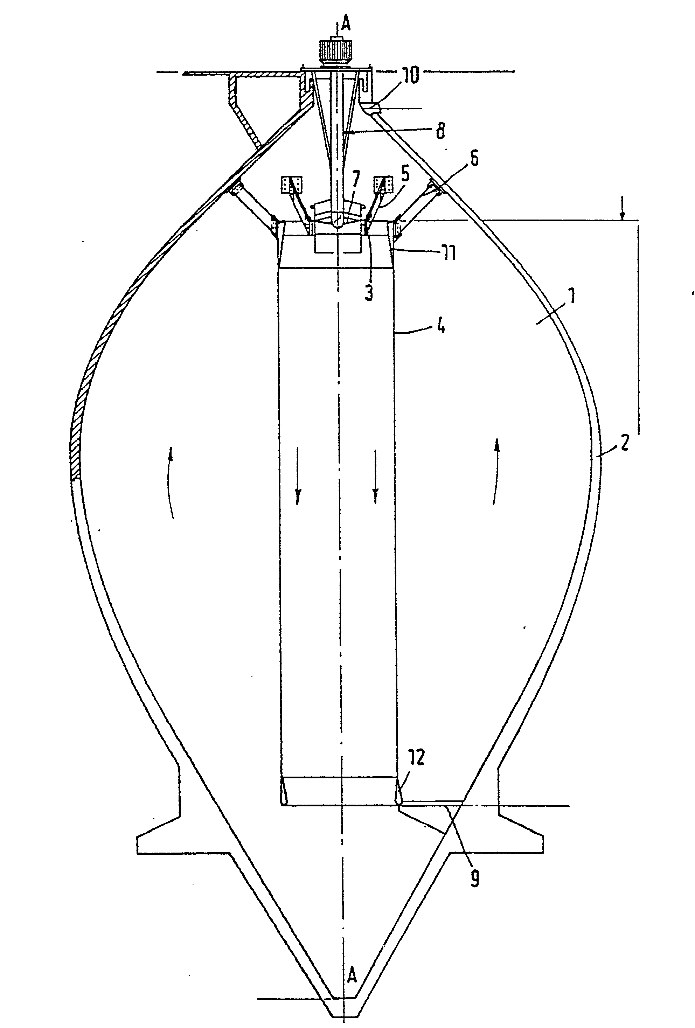

Die Umlaufstromführung 4 besteht aus einem Folienschlauch mit einer Verstärkungsauflage auf der Außenseite, d.h. in Richtung zur Innenwandung des Behälters. Er ist am oberen Ende mit dem Hohlkörper 11 und am unteren Ende mit dem Hohlkörper 12 verbunden. Diese Hohlkörper sind ringförmige Gebilde, mit dem aus der Fig. 1 ersichtlichen Querschnitt. Im Ausführungsbeispiel bestehen sie aus mehreren zusammengesetzten Segmenten, die z.B. aus Stahlblech bestehen.

Die Hohlkörper können auch nach Art von aufblasbaren bzw. ausschäumbaren Ringen aus flexiblem Material bestehen und sind dann entsprechend nach den aus der Schlauchbootherstellung bekannten Techniken hergestellt, wobei die Umlaufstromführung an sie angearbeitet ist. In diesem Falle wird die Umlaufstromführung mitsamt den Hohlkörpern in den Behälter eingebracht und an den Profilen 6 befestigt. Anschließend wird der Hohlkörper 11 mit einem Druckgas und der Hohlkörper 12 z.B. mit schwerem Füllstoff versehenen Kunststoffmaterial gefüllt, so daß die Umlaufstromführung und die Hohlkörper die aus der Fig. ersichtliche Gestalt annehmen.

## Patentansprüche

1. Vorrichtung zum anaeroben Behandeln von Rohschlamm bzw. hochbelastetem Abwasser, insbesondere aus kommunalen Kläranlagen, wobei die, Behandlung in mindestens zwei Reaktionsräumen mit unterschiedlichem biochemischem Milieu erfolgt,
dadurch gekennzeichnet,
daß in den Reaktionsräumen (1) zur Erzeugung einer Umlaufströmung jeweils mindestens eine Umlaufstromführung (4) und ein Stromteiler (3) koaxial zueinander angeordnet sind, in dem Stromteiler ein Stromrad axialer Bauart angeordnet ist und daß die Umlaufstromführung aus flexiblem Material besteht.

2. Vorrichtung nach Anspruch 1,
dadurch gekennzeichnet,
daß die Umlaufstromführung ein Gewebeschlauch mit einer Beschichtung ist.

3. Vorrichtung nach Anspruch 1,
dadurch gekennzeichnet,
daß die Umlaufstromführung ein Folienschlauch mit einer Verstärkungseinlage bzw. Verstärkungsauflage ist.

4. Vorrichtung nach einem der Ansprüche 1 bis 3,
dadurch gekennzeichnet,
daß die Umlaufstromführung an ihrem oberen und unteren Ende jeweils einen Hohlkörper (11,12) aufweist.

5. Vorrichtung nach Anspruch 4,

dadurch gekennzeichnet,
daß der untere Hohlkörper durch Ausgießen bzw. Ausschäumen mit einem Material beschwert ist.

6. Vorrichtung nach Anspruch 5 oder 6, dadurch gekennzeichnet, daß der obere Hohlkörper als Auftriebskörper ausgebildet ist.

7. Vorrichtung nach Anspruch 6, dadurch gekennzeichnet, daß der obere Korper ein gasgefullter Körper ist.

8. Vorrichtung nach einem der Ansprüche 4 bis 7, dadurch gekennzeichnet, daß der Auftrieb des oberen Hohlkörpers das Gewicht der Umlaufstromführung und das Gewicht des unteren beschwerten Hohlkörpers im wesentlichen kompensiert.

9. Vorrichtung nach einem der Ansprüche 1 bis 8, dadurch gekennzeichnet, daß die Umlaufstromführung mindestens eine in Umfangrichtung verlaufende Versteifungseinlage aufweist.

10. Vorrichtung nach einem der Ansprüche 4 bis 9, dadurch gekennzeichnet, daß die Hohlkörper als Stromumkehr-Leitkörper mit tropfenförmigem Profil ausgebildet sind.

## Claims

1) Appliance for the anaerobic treatment of raw sludge, respectively highly polluted waste water, especially from municipal sewage plans, whereby the treatment takes place in at least two reaction chambers with different biochemical environments,
characterized by
that in each of the reaction chambers (1) at least one circulation flow control(4) and one flow divider (3) are coaxially installed for producing a circulation flow;
that an axial flow wheel is inserted in the flow divider, and that the circulation flow control consists of flexible material.

2) Appliance according to Claim 1
characterized by
that the circulation flow control is a coated braided hose.

3) Appliance according to Claim 1
characterized by
that the circulation flow control is a foil hose with a reinforcing lining respectively a reinforcing coating.

4) Appliance according to one of the Claims 1 to 3
characterized by
that the circulation flow control has a hollow tube (11, 12) each on the upper and the lower end.

5) Appliance according to Claim 4
characterized by
that the lower hollow tube is weighted by teeming respectively foaming out with a material.

6) Appliance according to Claim 5 or 6
characterized by
that the upper hollow tube acts as a lift.

7) Appliance according to Claim 6
characterized by
that the upper hollow tube is filled with gas.

8) Appliance according to Claims 4 to 7
characterized by
that the lift of the upper hollow tube essentially balances out the weight of the circulation flow control and the weight of the lower weighted hollow tube.

9) Appliance according to Claims 1 to 8
characterized by
that the circulation flow control has at least one stiffening lining in the circumferential direction.

10) Appliance according to Claims 4 to 9
characterized by
that the hollow tubeswith their tear-shaped profile serve as flow reversers.

## Revendications

1. Dispositif de traitement anaérobie de la boue brute, à savoir des eaux usées fortement chargées, particulièrement celles venant des stations d'épuration communales, le traitement étant réalisé dans au moins deux espaces de réaction à milieu biochimique différent, caractérisé par le fait que
l'on ait installé dans chacun des espaces de réaction (1) au moins un guidage de courant de circulation (4) et un répartiteur de courant (3) coaxialement l'un par rapport à l'autre pour la production d'un courant de circulation, que dans le répartiteur de courant une roue de courant de construction axiale soit installée et que le guidage de courant de circulation soit en matière flexible.

2. Dispositif selon la revendication 1, caractérisé par le fait que
le guidage de courant de circulation soit un tuyau en tissu avec une enduction.

3. Dispositif selon la revendication 1 caractérisé par le fait que
le guidage de courant de circulation soit un tuyau en feuille avec une garniture de renforcement, à savoir un revêtement de renforcement.

4. Dispositif selon une des revendications 1 à 3 caractérisé par le fait que
le guidage de courant de circulation présente une pièce creuse (11,12) à ses extremités supérieure et inférieure.

5. Dispositif selon la revendication 4 caractérisé par le fait que
la pièce creuse inférieure est alourdie par un coulage, à savoir un remplissage de mousse d'un matériau quelconque.

6. Dispositif selon la revendication 5 ou 6 caractérisé par le fait que

la pièce creuse supérieure est réalisée comme un flotteur.

7. Dispositif selon la revendication 6, caractérisé par le fait que la pièce creuse supérieure est un corps rempli de gaz.

8. Dispositif selon une des revendications de 4 à 7 caractérisé par le fait que la poussée verticale de la pièce creuse supérieure compense largement le poids du guidage de courant de circulation et le poids de la pièce creuse inférieure alourdie.

9. Dispositif selon l'une des revendications de 1 à 8, caractérisé par le fait que le guidage de courant de circulation a au moins une garniture de renfort dirigée dans le sens de la périphérie.

10. Dispositif selon une des revendications de 4 à 9 caractérisé par le fait que les pièces creuses sont réalisées comme des corps de changement de direction du courant à profil en forme de goutte.